Europäisches Patentamt

European Patent Office

Office européen des brevets

(11) Publication number: **0 068 641**
A1

## (12) EUROPEAN PATENT APPLICATION

(21) Application number: 82302759.4

(22) Date of filing: 27.05.82

(51) Int. Cl.³: **H 02 K 11/00**, H 02 K 7/08, F 16 C 35/06

(30) Priority: 22.06.81 US 275967

(43) Date of publication of application: 05.01.83 Bulletin 83/1

(84) Designated Contracting States: AT BE CH DE FR GB IT LI LU NL SE

(71) Applicant: The Lima Electric Company, Inc., 200 East Chapman Road, Lima Ohio 45802 (US)

(72) Inventor: Szippl, Andrew F., 3636 Pevee Road, Lima Ohio (US)
Inventor: Walker, Robert B., 1688 Neubrecht Road, Lima Ohio (US)

(74) Representative: Rooney, Paul Blaise et al, D.Young & Co. 10 Staple Inn, London WC1V 7RD (GB)

(54) Generator.

(57) An energy efficient generator (10) includes a rotor assembly (28, 29) utilizing a hollow or tubular shaft (26) journaled in a housing for slight axial floating movement. The rotating rectifier (50) of the generator (10) is positioned inside the hollow shaft (26) for rotation therewith. In this manner the shaft (26) and, of course, the rotor assembly (28, 29) is significantly reduced in mass not only improving the energy efficiency of the unit, but also permitting the rotating rectifier (50) assembly to be much more accessible for inspection, service or replacement. The floating journal (30) for the hollow shaft (26) also minimizes replacement or rebuild requirements while permitting the driving engine crankshaft (15) to float axially between its thrust bearings as may occur under start up and high torque applications.

## ~~DISCLOSURE~~

This invention relates generally as indicated to a generator and more particularly to certain improvements in generators providing better efficiency with reduced costs, longer life and fewer maintenance or repair problems.

## ~~BACKGROUND OF THE INVENTION~~

In conventional generators, the rotor assembly which includes as the main components a main rotor, an exciter rotor, and a rotating rectifier assembly is usually mounted on a solid shaft journaled at one end in the generator housing and connected at the opposite end to the drive shaft of a prime mover such as a diesel engine.  Of necessity, the rotating rectifier assembly has been generally circular in form and is secured around the outside of the shaft inboard of the journal.  In order to remove the rectifier it has generally been necessary to remove the bearing cap or carrier, and then to pull the bearing to remove the bearing from the main shaft.  This operation, of course, requires considerable care to avoid bearing damage.  Once the bearing is free, to remove the rectifier requires that the leads be disconnected followed by removal of fasteners holding the rectifier in place on its mounting hub.

Only then is the rectifier free for removal and inspection or testing.  To replace the rectifier would require a time consuming reversal of the above outlined procedure.  Accordingly, it is highly desirable to provide a generator with a rotating rectifier which can more easily be removed for inspection or replacement without requiring the manipulation of fasteners, the pulling of bearings, or, in the case of inspection, the disconnection or re-connection of all of the leads

Also, because one end of the shaft is connected to the prime mover drive shaft, any axial movement of one shaft will result in axial movement of the other in the housing. Under start up and high torque applications, the driving engine crankshaft tends to float axially between its thrust bearing. With continued movement under such start up or high torque applications, the outer race of the bearing will move or rotate slightly. After prolonged periods of such movement, the outer bearing race may wear the bearing carrier down. When this occurs, the bearing fit becomes sloppy and thus wears out the bearing and bearing carrier. It is thus desirable to permit the outer race of the bearing to float slightly in the bearing carrier so that it will not turn but can still move axially to allow the engine crankshaft to float between its thrust bearings.

It is also, of course, desirable to provide a generator utilizing a rotor assembly of reduced mass and cost which incorporates the above noted maintenance efficiencies.

SUMMARY OF THE INVENTION

The generator of the present invention comprises a hollow or tubular shaft which is press fit into a fan hub at the front end and which is provided at its rear end with a bearing sub-assembly journaling the shaft within the housing end bell. The front end of the shaft is connected to the prime mover or engine drive shaft through the fan hub.

The journal within the end bell is press fit on the rear end of the tubular shaft and includes an external bearing retainer sleeve from which projects a small pin or key projecting into an axially extending slot in the bearing carrier of the end bell. Such construction permits the engine crankshaft to float between its thrust bearing minimizing wear on the generator bearing carrier.

The hollow tubular shaft is provided with two radially extending openings or ports protected by grommets through which extend leads from the exciter rotor and the main rotor to the rotating rectifier which is positioned inside the shaft. The rotating rectifier is conveniently mounted on a rectangular insulation plate or circuit board, the width of which is approximately the I.D. of the shaft. Sufficient length of lead wires are provided within the shaft to permit the rectifier to be pulled out the open end of the shaft for inspection or servicing without first disconnecting any of the leads or removing any fasteners. Moreover, with a rectangular board rotating rectifier, the position of the diodes and their leads can more conveniently and compactly be arranged.

It is accordingly a principle object of the present invention to provide an energy efficient generator which is more easily maintained and less costly to manufacture.

A further important object is the provision of such having a tubular shaft with the rotating rectifier being accomodated within such shaft.

Another important object is the provision of such generator wherein the rotating rectifier is of a rectangular board type which is not secured within the generator by fastenings.

Another principle object is the provision of such generator and rotating rectifier which may be removed without disconnecting leads or such fasteners.

A further principle object is the provision of a more compact generator which does not require a rotating rectifier or mounting hub therefor externally of the shaft.

It is also an important object of the present invention to provide a generator wherein the shaft is journaled in a manner to permit slight axial or floating movement of the shaft.

3

Still another object is the provision of such generator wherein the shaft may float with the engine crankshaft without undue bearing wear.

A yet further object is the provision of a generator shaft journal which includes a pin or key projecting from a bearing retaining sleeve and situated in an axial slot in the bearing carrier.

Other objects and advantages of the present invention will become apparent as the following description proceeds.

To the accomplishment of the foregoing, the invention, then, comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.

BRIEF DESCRIPTION OF THE DRAWINGS

In said annexed drawings:

Figure 1 is an elevation partially broken away and in section of a generator in accordance with the present invention connected to the shaft of an engine;

Figure 2 is a fragmentary section of the rear or journal end of the generator and its shaft illustrating the rotating rectifier partially removed;

Figure 3 is a fragmentary transverse section taken from the line 3-3 of Figure 2 illustrating the shaft journal with the journal carrier broken away;

Figure 4 is a somewhat enlarged top edge view of the rotating rectifier; and

Figure 5 is a side elevation of the rotating rectifier as taken substantially from the line 5-5 of Figure 4;

Figure 6 is a fragmentary view of the journal and carrier illustrating the employment of a key between the bearing retaining sleeve and carrier; and

Figure 7 is a radial section taken substantially on the line 7-7 of Figure 6.

## DETAILED DESCRIPTION OF THE ILLUSTRATED EMBODIMENTS

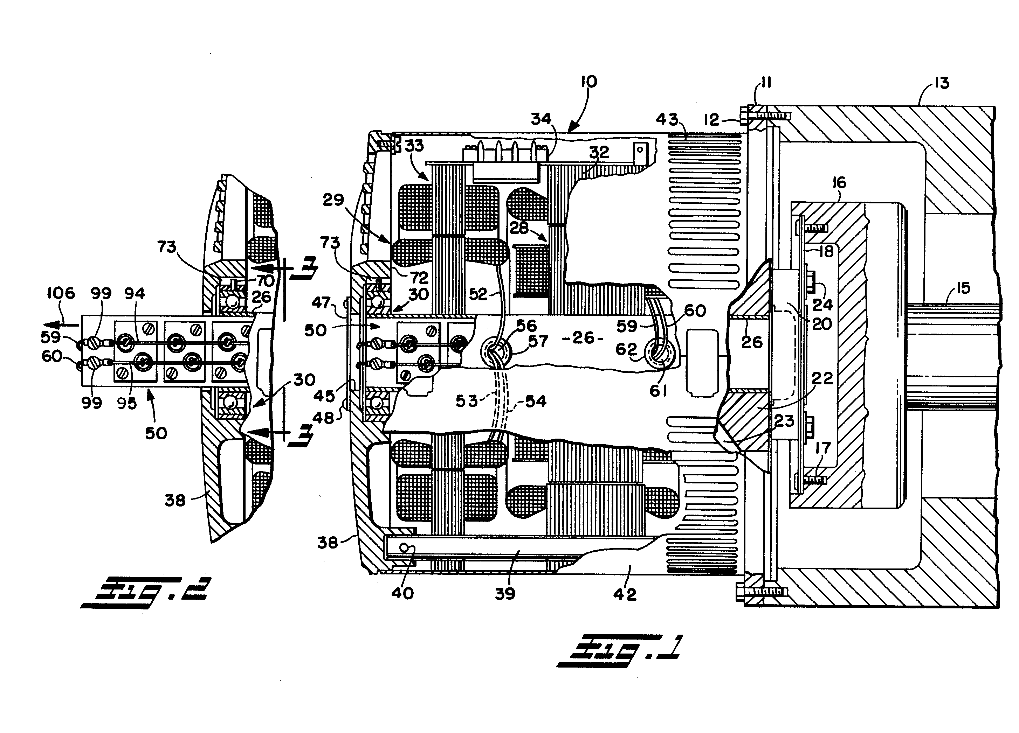

Referring now to the drawings and first to Figure 1, there is illustrated a generator 10 which includes a ring-shape fly wheel housing adapter 11 secured by fasteners 12 to engine fly wheel housing 13. The engine includes a crankshaft 15 and a fly wheel 16. The fly wheel is secured by the fasteners indicated at 17 to drive discs 18 mounted on hub-spacer 20 which is in turn secured to driving hub 22 which may support integrally or separately fan blades 23. The driving discs, hub-spacer and driving hub are secured together by the fasteners indicated at 24.

The front end of the tubular shaft 26 of the generator is press fit within the driving hub 22 as indicated. Also, press fit on the tubular shaft is the main rotor 28, the exciter rotor 29, and journal assembly 30. The main rotor 28 rotates within stator 32 while the exciter rotor 29 rotates within exciter stator 33. The stationary rectifier assembly is mounted between the two as indicated at 34. The tubular shaft lends itself more readily to the press fitting of the components thereon. With a solid shaft, more expensive turned shoulders, keys and keyways would normally be employed.

The journal 30 supports the rear end of the shaft 26 in housing end bell 38. The end bell is connected to and supported from the engine adapter ring 11 by a series of support rods 39 pinned in place by roll pins seen at 40. A cover band 42 between the end bell and adapter ring completes the housing, such cover band being provided with perforations 43 adjacent the fan.

It is noted that the end bell is provided with a central circular opening seen at 45 which has an I.D. of approximately the O.D. of the tubular shaft 26. The opening may be covered by a name plate 47 held in place by suitable fasteners 48.

Situated within the rear end of the tubular shaft 26 is the rotating rectifier assembly 50. The rotating rectifier assembly is electrically connected to the exciter rotor by the three leads seen at 52, 53 and 54 which pass outwardly through the tubular shaft through port 56. The edge of the port hole is protected by grommet 57. The two main field leads for the main rotor seen at 59 and 60 pass outwardly through port 61 in the tubular shaft 26, the port hole edge again being protected by grommet 62.

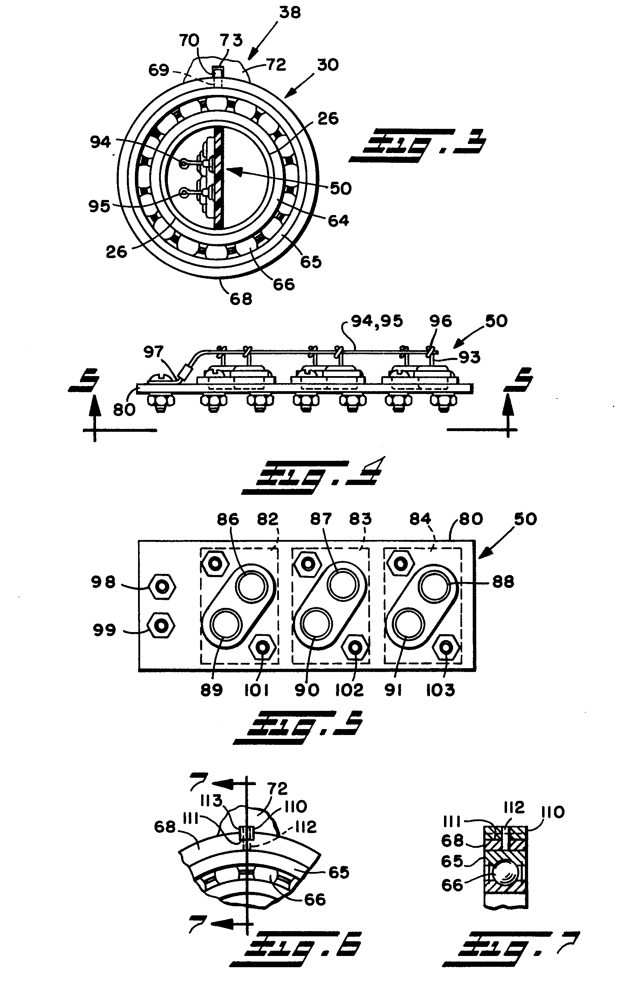

Referring now additionally to Figure 3, it will be seen that the journal 30 comprises the usual inner race 64, outer race 65, and balls 66 therebetween. Press fit around the outer race 65 is a bearing sleeve 68 which is provided with at least one radial hole 69 into which is inserted roll pin 70.

As seen in Figures 1 and 2, the end bell 38 is provided with an annular inwardly directed boss or flange 72, the I.D. of which provides a bearing seat or carrier. An axially extending slot 73 is milled into the bearing carrier and when the bearing is assembled into the bearing carrier the roll pin 70 is slipped into the slot 73. Accordingly, the bearing sleeve and outer race is permitted to float (.0005 to 001 inch or .013 to .025 mm loose fit) in the bearing carrier. This permits the driving engine crankshaft to float fore and aft between its thrust bearings which may occur under start up or high torque applications. With this construction the shaft can move fore and aft or axially float with the engine crankshaft minimizing bearing wear.

Referring now additionally to Figures 4 and 5, it will be seen that the rotating rectifier assembly 50 includes a rectangular insulation plate or circuit board 80 on which is mounted three heat sinks 82, 83 and 84. Diodes 86, 87 and 88 as well as paired diodes 89, 90 and 91 may be press fit into the heat sinks. The projecting diode leads 93 are wrapped around and soldered to parallel bus leads 94 and 95 as indicated at 96. The bus leads are connected through ring terminals 97 to main rotor lead connections 98 and 99. The exciter rotor lead connections are seen at 101, 102 and 103. Again, such lead connections may readily be made with ring terminals.

As can be seen more clearly in Figures 1, 2 and 3 the width of the insulation plate (from top to bottom in Figure 5) is such that it will snugly fit in the I.D. of the tubular shaft 26. When inserted, there is ample room for any excess length of the leads 52 through 54 or 59 and 60.

It is believed apparent that the rotating diode assembly can be serviced without disturbing the generator. By removing the name plate 47, the insulation plate or circuit board can be grasped and pulled outwardly in the direction of the arrow 106 in Figure 2, to the limit of the assembly leads. At this point the rotating rectifier assembly is fully visual and physically accessible. The three exciter and two main field leads can readily be removed to test for shorted diodes. The bus wires may be disconnected from each diode to test for open diodes. Alternatively, the entire assembly may quickly be replaced. With servicing completed, the rotating rectifier assembly 50 is simply inserted back into the tubular shaft and the name plate is replaced. The interior of the tubular shaft readily accomodates any excess lead lengths.

Referring now to Figures 6 and 7, it will be seen that instead of roll pin 70, a preferred axially extending key 110 may be employed. The key may be force fit into rather shallow axially extending slot 111 in bearing retainer sleeve 68 and may be located and retained in place by a radially extending roll pin 112. The key 110 fits somewhat more loosely in internal axially extending slot 113 in bearing carrier 72. In either of the embodiments illustrated the bearing may float in its carrier.

It can now be seen that there is provided an energy efficient and compact low cost generator which is easier to maintain and service and having a longer useful life

0068641

CLAIMS:

1. A generator comprising a tubular rotor assembly shaft, one end of said shaft being open, and a rotating rectifier assembly mounted within said shaft and adapted to be inserted in and removed therefrom.

2. A generator as set forth in claim 1 wherein said rotating rectifier assembly includes a rectangular circuit board, one width dimension of which is approximately the I.D. of the tubular shaft.

3. A generator as set forth in claim 2 wherein said one width dimension is the shorter dimension adapted to extend diametrically of the shaft while the longer dimension extends axially.

4. A generator as set forth in claim 3 wherein said rotor assembly includes a main rotor and an exciter rotor, and respective lead ports through said shaft for the leads connecting the main and exciter rotors with the rotating rectifier assembly.

5. A generator as set forth in claim 4 including grommets protecting the port edges.

6. A generator as set forth in claim 3 including paired diodes mounted on said circuit board with one of each pair being connected by bus wires to respective connecting terminals at one end of said circuit board.

7. A generator as set froth in claim 6 including a connection for each paired diodes.

8. A generator as set forth in claim 1 including a housing, one end of said shaft journaled in said housing with the opposite end being adapted to be connected to the crankshaft of a prime mover, and means supporting said journal in said housing for slight axial floating movement to permit said shaft to float with the crankshaft.

9. A generator as set forth in claim 8 wherein said journal is press fit on said shaft and includes a press fit outer sleeve, and at least one pin protecting radially from said outer sleeve.

10. A generator as set forth in claim 9 including a journal carrier in said housing adapted to receive said journal sleeve, said carrier including an axial slot to receive said pin.

0068641

FIG. 1

FIG. 2

FIG.3

FIG.4

FIG.5

FIG.6

FIG.7

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 005 930   (LICENTIA)  *Page 1, lines 39-88; page 2; figures 1-5* | 1-4,6, 7 | H 02 K   11/00<br>H 02 K   7/08<br>F 16 C   35/06 |
| X | PATENTS ABSTRACTS OF JAPAN, vol. 2, no. 156, 26th December 1978, page 10196E78;<br>& JP - A - 53 126 108 (TOKYO SHIBAURA DENKI K.K.) (11-04-1978) *Abstract; figures 1-4* | 1,3,4, 6 | |
| A | US-A-2 897 383   (BARROWS et al.) *Column 3, lines 15-75; column 4, lines 1-13; figures 1-3* | 1-7 | |
| A | US-A-3 470 405   (ANDERSSON)  *Column 2, lines 4-49; figures 1-3* | 2,3,6, 7 | **TECHNICAL FIELDS SEARCHED (Int. Cl. ³)** |
| A | GB-A-1 088 375   (JOSEPH LUCAS) *Page 2, lines 114-130; page 3, lines 1-17; figures 5-7* | 2,6,7 | H 02 K<br>F 16 C |
| A | US-A-3 271 601   (RAVER) *Column 5, lines 5-20; figures 1,5* | 5 | |

-/-

The present search report has been drawn up for all claims

| Place of search | Date of completion of the search | Examiner |
|---|---|---|
| THE HAGUE | 27-09-1982 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

0068641

Application number

EP 82 30 2759

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | DE-C- 860 651<br>(SIEMENS-SCHUCKERT)<br>*Page 1, lines 1-31; page 2, lines 17-52; figures 1,2* | 8-10 | |
| A | DE-C- 848 057 (ROBERT BOSCH)<br>*Page 2, lines 61-102; figures 1,2* | 8-10 | |

TECHNICAL FIELDS
SEARCHED (Int. Cl. ³)

The present search report has been drawn up for all claims

| Place of search | Date of completion of the search | Examiner |
|---|---|---|
| THE HAGUE | 27-09-1982 | TIO K.H. |